# EUROPÄISCHE PATENTSCHRIFT

(11) **EP 3 497 684 B1**
(45) Veröffentlichungstag und Bekanntmachung des Hinweises auf die Patenterteilung: **11.12.2019**
(21) Anmeldenummer: 17745311.5
(22) Anmeldetag: 24.07.2017
(51) Int. Cl.: G08G 1/00

(54) **SYSTEM UND VERFAHREN ZUM AUSTAUSCH VON INFORMATIONEN**
SYSTEM AND METHOD FOR EXCHANGING INFORMATION
SYSTÈME ET PROCÉDÉ D'ÉCHANGE D'INFORMATIONS

(30) Priorität: 10.08.2016 DE 102016214855
(43) Veröffentlichungstag der Anmeldung: 19.06.2019
(73) Patentinhaber: Audi AG, 85045 Ingolstadt (DE)
(72) Erfinder: SPEHL, Jürgen, 85139 Wettstetten (DE); POHL, Andreas, 85095 Denkendorf (DE); PAPP, Aurel, 85123 Karlskron (DE)
(86) Internationale Anmeldenummer: PCT/EP2017/068676
(87) Internationale Veröffentlichungsnummer: WO 2018/036735

(56) Entgegenhaltungen:
- WO-A2-2006/006076
- US-A1- 2014 294 180
- US-A1- 2015 071 139

## Beschreibung

Die Erfindung betrifft ein System und ein Verfahren zum Austausch von Informationen zwischen Kraftfahrzeugen.

Zur Realisierung einer Kommunikation zwischen Kraftfahrzeugen weist jedes Kraftfahrzeug eine hierfür vorgesehenen Sendeanlage auf. Damit können zwischen den Kraftfahrzeugen Informationen und/oder Daten ausgetauscht werden.

Die Druckschrift US 2010/0076670 A1 beschreibt ein System und ein Verfahren zur Funkkommunikation zwischen Fahrzeugen und weiteren Funkknoten, wobei das System mit den Fahrzeugen über Bluetooth oder WLAN kommuniziert.

Die Druckschrift US 2009/0285135 A1 beschreibt ein Gerät, das dazu ausgebildet ist, einen Radiofrequenzpfad auszuwählen, wobei das Gerät hierfür einen Diplexer aufweist, der über eine Kontrollschnittstelle mit verschiedenen Radiomodulen verbunden ist.

Die Druckschrift DE 10 2015 121 091 A1 beschreibt ein computerimplementiertes Verfahren für ein Fahrzeug, bei dem Software-Updates zur Installation in einer elektronischen Steuereinheit des Fahrzeugs empfangen werden. Sofern das Software-Update kompatibel ist, wird es in einen aktiven Gebrauch geschaltet.

Die Druckschrift US 2014/294180 zeigt ein Sicherheitssystem
mit Mobilfunkverbindung.

Die Druckschrift US 2015/071139 zeigt Systeme zur Funkkommunication zwischen Maschinen.

Die Druckschrift WO 2006/006076 zeigt eine rekonfigurierbare Architektur mit niedriger Stromaufnahme.
Vor diesem Hintergrund werden ein System und ein Verfahren mit den Merkmalen der unabhängigen Patentansprüche vorgestellt. Der Gegenstand der Erfindung ist in den Ansprüchen definiert.

Ausführungsformen des Systems und des Verfahrens gehen aus den abhängigen Patentansprüchen und der Beschreibung hervor.

Das erfindungsgemäße System für ein Kraftfahrzeug ist zum Austausch von Informationen mit mindestens einem weiteren Kraftfahrzeug ausgebildet, wobei das System eine zentrale Recheneinheit mit einem Rechenkern aufweist, der mit mindestens einem Antennenmodul verbunden ist. Das mindestens eine Antennenmodul ist dazu ausgebildet, Signale, die Informationen umfassen, mit dem mindestens einen weiteren Kraftfahrzeug auszutauschen, wobei in dem Rechenkern eine Anwendung zum Durchführen einer Kraftfahrzeug-zu-Kraftfahrzeug Kommunikation installiert ist, wobei der Rechenkern dazu ausgebildet ist, das mindestens eine Antennenmodul unter Durchführung einer Signalverarbeitung zu steuern. Außerdem sind zwischen dem Rechenkern und einem Protokollstapel der zentralen Recheneinheit Daten für eine Kommunikation mit dem mindestens einen Kraftfahrzeug austauschbar.

Der Rechenkern ist über jeweils ein Signalübermittlungsmodul zum Empfangen und/oder Senden von Signalen mit dem mindestens einen Antennenmodul verbunden, wobei das jeweilige Signalübermittlungsmodul einen ersten Schalter zum Empfangen und/oder Senden der Signale, einen ersten SAW-Filter, eine Endstufe, einen rauscharmen Verstärker, einen zweiten SAW-Filter und einen zweiten Schalter zum Empfangen und/oder Senden der Signale umfasst.

Das mindestens eine Antennenmodul ist in einem Gehäuse der zentralen Recheneinheit und/oder in einer separaten Antenneneinheit angeordnet. Falls das System lediglich ein Antennenmodul aufweist, ist dieses in der Recheneinheit angeordnet. Ein optionales weiteres Antennenmodul ist entweder in der Recheneinheit oder der separaten Antenneneinheit angeordnet.

In Ausgestaltung weist das System zwei Antennenmodule auf, die beide mit dem Rechenkern verbunden sind, wobei der Rechenkern dazu ausgebildet ist, jedes Antennenmodul unter Durchführung einer für das jeweilige Antennenmodul durchzuführenden Signalverarbeitung zu steuern.

In der Regel ist das mindestens eine Antennenmodul und somit jedes Antennenmodul über ein Verstärkermodul mit dem Rechenkern verbunden.

Das erfindungsgemäße Verfahren ist für ein Kraftfahrzeug zum Austausch von Informationen mit mindestens einem weiteren Kraftfahrzeug vorgesehen, wobei eine zentrale Recheneinheit mit einem Rechenkern, der mit mindestens einem Antennenmodul verbunden ist, verwendet wird. Mit dem mindestens einen Antennenmodul werden Signale, die Informationen umfassen, mit dem mindestens einen weiteren Kraftfahrzeug ausgetauscht. In dem Rechenkern ist eine Anwendung zum Durchführen einer Kraftfahrzeug-zu-Kraftfahrzeug Kommunikation installiert, wobei das mindestens eine Antennenmodul von dem Rechenkern unter Durchführung einer Signalverarbeitung gesteuert wird. Außerdem werden zwischen dem Rechenkern und einem Protokollstapel der zentralen Recheneinheit Daten für eine Kommunikation mit dem mindestens einen Kraftfahrzeug ausgetauscht.

Durch den Rechenkern wird zur Durchführung der softwaregestützten Signalverarbeitung eine softwaregestützte Analog-Digital-Wandlung, eine softwaregestützte Digital-Analog-Wandlung, eine softwaregestützte Bitübertragung unter Simulation einer Bitübertragungsschicht, eine softwaregestützte Medienzugriffskontrolle, eine softwaregestützte Medienzugriffssteuerung, eine softwaregestützte logische Verbindungskontrolle und/oder eine softwaregestützte Basisband - Verarbeitung durchgeführt.

Weiterhin ist es möglich, dass Software, die von der Recheneinheit zur softwaregestützten Signalverarbeitung verwendet wird, aktualisiert wird.

Die Signale werden von dem Rechenkern softwaregestützt aufbereitet, gefiltert, korrigiert, kodiert und/oder dekodiert, wobei Daten zum Bereitstellen der Signale von dem Rechenkern softwaregestützt komprimiert werden, und/oder wobei von dem Rechenkern softwaregestützt die Basisband-Verarbeitung und/oder ein Abgleich von Kanälen zum Austausch der Signale mit dem mindestens einen weiteren Kraftfahrzeug durchgeführt wird.

In Ausgestaltung werden zwei Antennenmodule verwendet, wobei jedes Antennenmodul von dem Rechenkern unter Durchführung einer jeweiligen Signalverarbeitung gesteuert wird, wobei mit einem ersten Antennenmodul unter Bereitstellung eines öffentlichen WLANs eine Kraftfahrzeug-zu-Kraftfahrzeug-Kommunikation bereitgestellt wird, und wobei mit einem zweiten Antennenmodul über Bluetooth eine Kraftfahrzeug-zu-Kraftfahrzeug-Kommunikation bereitgestellt wird, wobei das erste Antennenmodul mit dem Rechenkern über eine erste Signalverarbeitung gesteuert wird, und wobei das zweite Antennenmodul mit dem Rechenkern über eine zweite Signalverarbeitung gesteuert wird.

Mit dem System und dem Verfahren wird eine Möglichkeit zur Kommunikation zwischen Kraftfahrzeugen im Straßenverkehr bereitgestellt, wobei ein öffentliches pWLAN mit einer Frequenz von bspw. 5,9 GHz verwendet wird. Kraftfahrzeuge, die jeweils eine Ausführungsform des Systems aufweisen, können hiermit untereinander kommunizieren und Daten austauschen. Außerdem können zwischen den Kraftfahrzeugen über ein Niedrigenergie-Bluetooth (BT LE (low energy)) mit einer Frequenz von bspw. 2,4 GHz Daten ausgetauscht werden. Dabei können für das pWLAN und das Niedrigenergie-Bluetooth getrennte Antennenmodule, getrennte Signalübermittlungsmodule und ein gemeinsamer Rechenkern zur Signalverarbeitung verwendet werden, um Ruhestrom-Anforderungen zu genügen. Dabei ist das Signalverarbeitungsmodul für das pWLAN sowie für das Niedrigenergie-Bluetooth jeweils direkt an dem hierzu vorgesehenen Antennenmodul angeschlossen. Mindestens ein Antennenmodul ist bspw. an einem Dach des Kraftfahrzeugs angeordnet.

Das System umfasst als Rechenkern einen universellen Mikrokontroller zum Durchführen einer Anwendung zur Kommunikation zwischen Kraftfahrzeugen (Car2Car App-µC), der in eine Ausführungsform einer Recheneinheit des Systems lediglich eingesetzt bzw. integriert wird, wobei Funktionen zur Kommunikation ausgeführt werden können (plug & play). Eine Recheneinheit einer Ausführungsform des Systems umfasst auch eine Schichteinteilung für Rundfunk (RF Frontend), eine Medienzugriffssteuerung (MAC bzw. media acces control), eine erste digitale Basisband- bzw. Baseband-Verarbeitung (BB/DSP), eine Bitübertragungsschicht (PHY bzw. physical layer), ein Netzprotokoll (LLC bzw. logical link control), einen Protokollstapel zur Durchführung der Kommunikation (Communication-Stack), den Rechenkern als Anwendungs-Mikroprozessor (Application-µP), ein Sicherheitsmodul und einen Anschluss zu einem Netzwerk (CAN) des Kraftfahrzeugs.

In Ausgestaltung kann das System in einer Basisversion bereitgestellt werden, das lediglich den Rechenkern und weitere elektronische Komponenten aufweist, wobei lediglich ein einiziger Kanal zur Übertragung von Signalen zwischen den Kraftfahrzeugen verwendet wird (pWLAN CCH). Je nachdem, in welchem Land das System konkret eingesetzt wird, wird das System entsprechend landesspezifisch eingestellt und/oder erweitert. Bei einem Einsatz in den USA kann lediglich ein Sendemodul (TX-only) aktiviert sein. Dabei können in den USA optional mehrere Kanäle (dual channel, diversity channel) genutzt werden, wobei zwischen einzelnen Kanälen hin und her geschaltet wird (channel switching). In der Recheneinheit kann eine jeweils erforderliche Software, bspw. zum Durchführen der Signalverarbeitung, installiert werden, wobei diese Software bei Bedarf auch aktualisiert, d. h. erneuert und/oder ausgetauscht werden kann.

Üblicherweise ist nur ein Antennenmodul erforderlich, das in der Recheneinheit, bspw. in einem Gehäuse und/oder an einer Außenwand der Recheneinheit installiert ist. Je nach Bedarf umfasst das System mindestens ein weiteres Antennenmodul, das in Ausgestaltung in einer zusätzlichen Antenneneinheit angeordnet und/oder integriert ist. Dieses zusätzliche Antennenmodul ist bspw. dann vorgesehen, wenn ein Dach des Kraftfahrzeugs stark gekrümmt ist oder als Großglasdach ausgebildet ist, oder falls das Kraftfahrzeug als Cabriolet ausgebildet ist. Hierbei können bspw. bei einer Frequenz von 6 GHz Kabelverluste ausgeglichen werden. Die Recheneinheit und die Antenneneinheit sind über ein Koaxialkabel mit geregeltem Kabelkompensor verbunden. Außerdem kann für ein Basisband eine digitale Modulation nach einem I/Q-Verfahren durchgeführt werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine ersten Ausführungsform des erfindungsgemäßen Systems, das zum Durchführen einer ersten Ausführungsform des erfindungsgemäßen Verfahrens geeignet ist.
Figur 2 zeigt in schematischer Darstellung eine zweiten Ausführungsform des erfindungsgemäßen Systems, das zum Durchführen einer zweiten Ausführungsform des erfindungsgemäßen Verfahrens geeignet ist.
Figur 3 zeigt in schematischer Darstellung eine dritten Ausführungsform des erfindungsgemäßen Systems, das zum Durchführen einer dritten Ausführungsform des erfindungsgemäßen Verfahrens geeignet ist.
Figur 4 zeigt in schematischer Darstellung eine vierten Ausführungsform des erfindungsgemäßen Systems, das zum Durchführen einer vierten Ausführungsform des erfindungsgemäßen Verfahrens geeignet ist.
Figur 5 zeigt in schematischer Darstellung eine fünften Ausführungsform des erfindungsgemäßen Systems, das zum Durchführen einer fünften Ausführungsform des erfindungsgemäßen Verfahrens geeignet ist.

Die Figuren werden zusammenhängend und übergreifend beschrieben. Gleichen Komponenten sind dieselben Bezugsziffern zugeordnet.

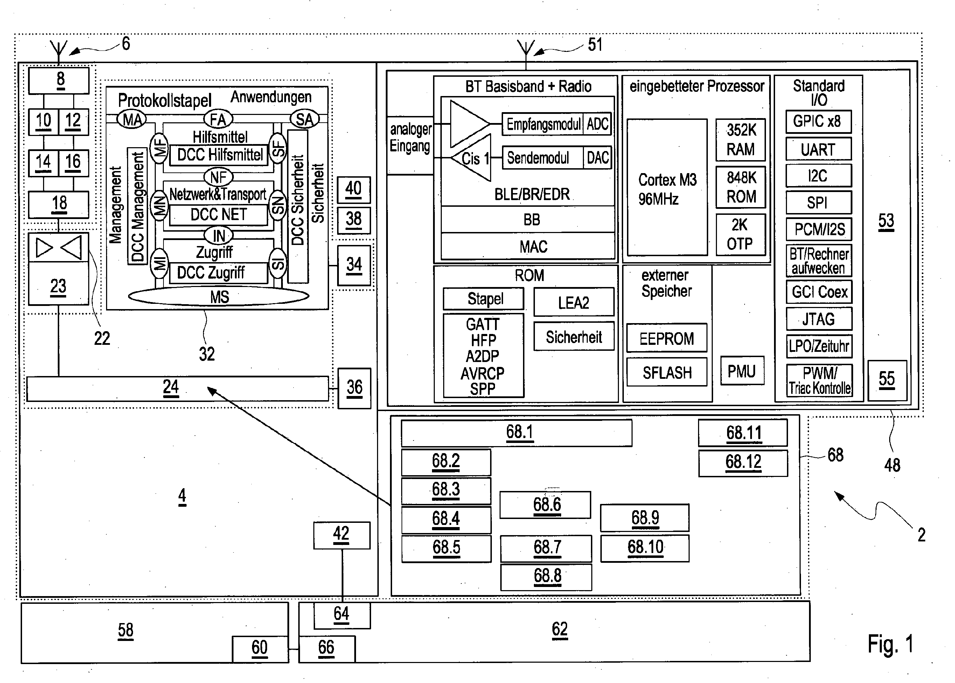

Die in Figur 1 schematisch dargestellte erste Ausführungsform des Systems 2 für ein Kraftfahrzeug zum Durchführen einer Kommunikation zwischen diesem Kraftfahrzeug und mindestens einem weiteren Kraftfahrzeug umfasst eine zentrale Recheneinheit 4 (802.11p Car2Car Board). Dabei umfasst die Recheneinheit 4 ein Antennenmodul 6 zum Senden und Empfangen von Signalen über elektromagnetische Wellen, das mit einem ersten Schalter 8 zum Empfangen und/oder Senden (Rx/Tx-Switch bzw. Receiver/Transceiver-Switch) der Signale verbunden ist. Dem ersten Schalter 8 sind ein erster SAW-Filter 10 (akustischer Oberflächenfilter), eine Endstufe 12 (PA, power amplifier), ein rauscharmer Verstärker 14 (LNA, low noise amplifier) und ein zweiter SAW-Filter 16 nachgeschaltet. Außerdem umfasst die Recheneinheit 4 einen zweiten Schalter 18 zum Empfangen und/oder Senden der Signale. Dabei sind der erste SAW-Filter 10, die Endstufe 12, der rauscharme Verstärker 14 und der zweite SAW-Filter 16 zwischen den beiden Schaltern 8, 18 angeordnet. Der erste Schalter 8, der erste SAW-Filter 10, die Endstufe 12, der rauscharme Verstärker 14 und der zweite SAW-Filter 16 bilden hier ein Signalübermittlungsmodul zum Empfangen und/oder Senden von Signalen, das dem Antennenmodul 6 zugeordnet ist. Mit dem Antennenmodul 6 und dem zugeordneten Signalübermittlungsmodul wird eine Kommunikation über ein öffentliches WLAN (pWLAN) bei einer Frequenz von 5,9 GHz ermöglicht.

Der zweite Schalter 18 ist mit einem Verstärkermodul 22 verbunden, das dazu ausgebildet ist, eine Signalverarbeitung 23, u. a. eine Synchronisation von Signalen, durchzuführen. Hierbei werden von dem Verstärkermodul 22 als Funktionen zur bspw. softwaregestützten Signalverarbeitung eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem Verstärkermodul 22 eine Bitübertragungsschicht (PHY bzw. physical layer), ein Netzprotokoll (LLC bzw. logical link control) und SDIO IF für eine Signalverarbeitung 23 bspw. softwaregestützt bereitgestellt. Das Verstärkermodul 22 ist mit einem Rechenkern 24, hier einem Mikrokontroller zum Durchführen einer Anwendung zur Kommunikation zwischen Kraftfahrzeugen (Car2Car App-µC) verbunden.

Die Recheneinheit 4 umfasst zudem einen Protokollstapel 32 (pStack), der wiederum mit einem Navigationssystem 34 zum Orten des Kraftfahrzeugs mit einem weltweiten Positionierungssystem, bspw. GPS, verbunden ist, ein als ASIC (anwendungsspezifische integrierte Schaltung) ausgebildetes Kryptographiemodul 36, einen als DRAM ausgebildeten dynamischen Speicherbaustein 38 und einen als Flash ausgebildeten Speicherbaustein 40. Die Recheneinheit 4 ist über einen Anschluss 42 mit einem Netzwerk (CAN) des Kraftfahrzeugs verbunden.

Der Protokollstapel 32 umfasst Protokolle für Anwendungen (Applications), die als Hilfsmittel (Facilities, bspw. DCC-Facilities) zum Bereitstellen eines Netzwerks und eines Transports (Networking und Transport, bspw. DCC-Net) oder eines Zugangs (Access, bspw. DCC-Access) ausgebildet und übereinander gestapelt sind. Für diese Anwendungen ist eine Verwaltung (Management, bspw. DCC-Management) und eine Sicherheit (Security, bspw. DCC-Security) vorgesehen.

Weiterhin umfasst das System 2 eine Antenneneinheit 48, die ein zusätzliches Antennenmodul 51 umfasst. Dieses Antennenmodul 51 ist zum Senden und Empfangen von Signalen über elektromagnetische Wellen ausgebildet, wobei hier ein Niedrigenergie-Bluetooth (BT LE) bei einer Frequenz von 4,2 GHz ermöglicht wird. Die Antenneneinheit 48 umfasst weiterhin ein Signalverarbeitungsmodul 53 und einen Anschluss 55 an das Netzwerk des Kraftfahrzeugs.

Das Signalverarbeitungsmodul 53 (BT LE 4.2) umfasst als Komponenten ein BT-Basisband und ein Radio mit einem analogen Eingang bzw. Front-End, einem Empfangsmodul (RX Chain) mit einem nachgeschalteten Analog-Digital-Wandler (ADC), einem Sendemodul (Tx Chain) mit einem vorgeschalteten Digital-Analog-Wandler, einer digitalen Basisband- bzw. Baseband-Verarbeitung (BB) und einer Medienzugriffssteuerung (MAC). Außerdem umfasst das Signalverarbeitungsmodul 53 einen eingebetteten Prozessor, der einen Cortex M3 mit einer Taktrate von 96 MHz, einen 352K EAM, einen 848K ROM und einen 2K OTP umfasst, einen Speicher (ROM), der einen Stapel (Stack) mit einem GATT, einem HFP, einem A2DP, einem AVRCP und einem SPP sowie ein LEA2 und ein Sicherheitsmodul (Security) umfasst, einen externen Speicher mit einem EEPROM und einem SFLASH, einer PMU und einer Standard Ein- und Ausgabe (I/O), die ein GPIO, ein UART, ein I2C, ein SPI, ein PCM/I2S, ein BT/Host wake, ein GCI Coex, ein JTAG, ein LPO/Timers und ein PWM/Triac Control aufweist.

Als weitere Komponenten umfasst das System 2 eine Mensch-Maschine-Schnittstelle 58, die über einen Anschluss 60 an dem Netzwerk angeschlossen ist, ein Koppelmodul 62 (Gateway) mit einem ersten Anschluss 64, durch den es über das Netzwerk mit dem Anschluss 42 der Recheneinheit 4 verbunden ist, und einem zweiten Anschluss 66, durch den es über das Netzwerk mit dem Anschluss 60 der Mensch-Maschine-Schnittstelle 58 verbunden ist. Figur 1 zeigt auch ein Funktionsmodul 68 des Rechenkerns 24. Dieses Funktionsmodul 68 umfasst als Funktionselemente Anwendungen 68.1, Fusionsmodule 68.2, Hilfsmittel 68.3, ein BTP 68.4, ein GeoNetworking 68.5, eine Firewall 68.6, ein Sicherheitsmodul 68.7, ein HSM 68.8, ein TCP/UDP 68.9, ein IPV6 68.10, ein Positionierungsmodul 68.11 und einen GPS-Empfänger 68.12.

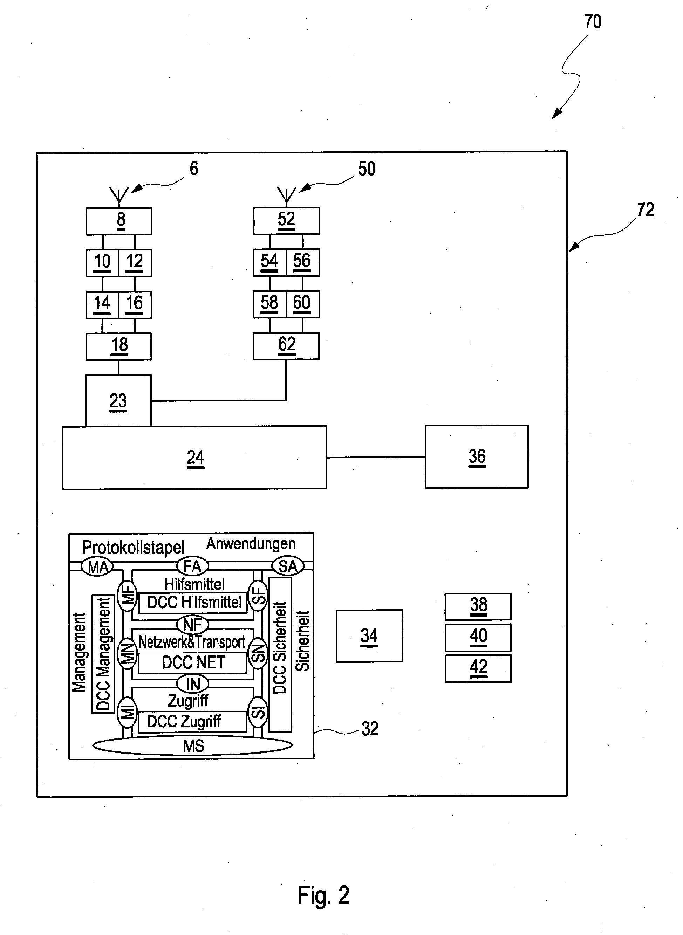

Die zweite Ausführungsform des Systems 70 ist in Figur 2 schematisch dargestellt und umfasst eine Recheneinheit 72 (802.11p), die ebenfalls ein Antennenmodul 6 zum Senden und Empfangen von Signalen über elektromagnetische Wellen, einen ersten Schalter 8, einen ersten SAW-Filter 10, eine Endstufe 12, einen rauscharmer Verstärker 14, einen zweiten SAW-Filter 16 und einen zweiten Schalter 18 umfasst.

Der zweite Schalter 18 ist mit einer Signalverarbeitung 23 verbunden, die hier direkt von einem Rechenkern 24 ausgeführt wird. Hierbei werden von dem Rechenkern 24 als Funktionen zur softwaregestützten Signalverarbeitung 23 eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt.

Die Recheneinheit 72 umfasst auch einen mit einem Navigationssystem 34 verbundenen Protokollstapel 32 (pStack), ein als ASIC ausgebildetes Kryptographiemodul 36, einen als DRAM ausgebildeten dynamischen Speicherbaustein 38 und einen als Flash ausgebildeten Speicherbaustein 40. Die Recheneinheit 72 ist über einen Anschluss 42 mit einem Netzwerk (CAN) des Kraftfahrzeugs verbunden.

Weiterhin umfasst die Recheneinheit 72 ein zweites Antennenmodul 50 zum Senden und Empfangen von Signalen über elektromagnetische Wellen mit einem ersten Schalter 52 zum Empfangen und/oder Senden (Rx/Tx-Switch bzw. Receiver/Transceiver-Switch) der Signale verbunden. Dem ersten Schalter 52 sind ein erster SAW-Filter 54, eine Endstufe 56, ein rauscharmer Verstärker 58 und ein zweiter SAW-Filter 60 nachgeschaltet. Außerdem umfasst die Antenneneinheit 48 einen zweiten Schalter 62 zum Empfangen und/oder Senden der Signale. Der erste Schalter 52, der erste SAW-Filter 54, die Endstufe 56, der rauscharme Verstärker 58, der zweite SAW-Filter 60 und der zweite Schalter 62 bilden hier ein Signalübermittlungsmodul zum Empfangen und/oder Senden von Signalen, das dem Antennenmodul 50 zugeordnet ist. Dabei sind der erste SAW-Filter 54, die Endstufe 56, der rauscharme Verstärker 58 und der zweite SAW-Filter 60 zwischen den beiden Schaltern 52, 62 angeordnet. Der zweite Schalter 62 ist wiederum mit mit der Signalverarbeitung 23 und somit auch mit dem Rechenkern 24 verbunden. Durch die beiden Antennenmodule 6, 50 wird eine Antennendiversität (Rx/Tx diversity) ermöglicht, wobei über den Rechenkern 24 für beide Antennenmodule 6, 50 ein Kanal und/oder Transceiver (CCH) bereitgestellt wird.

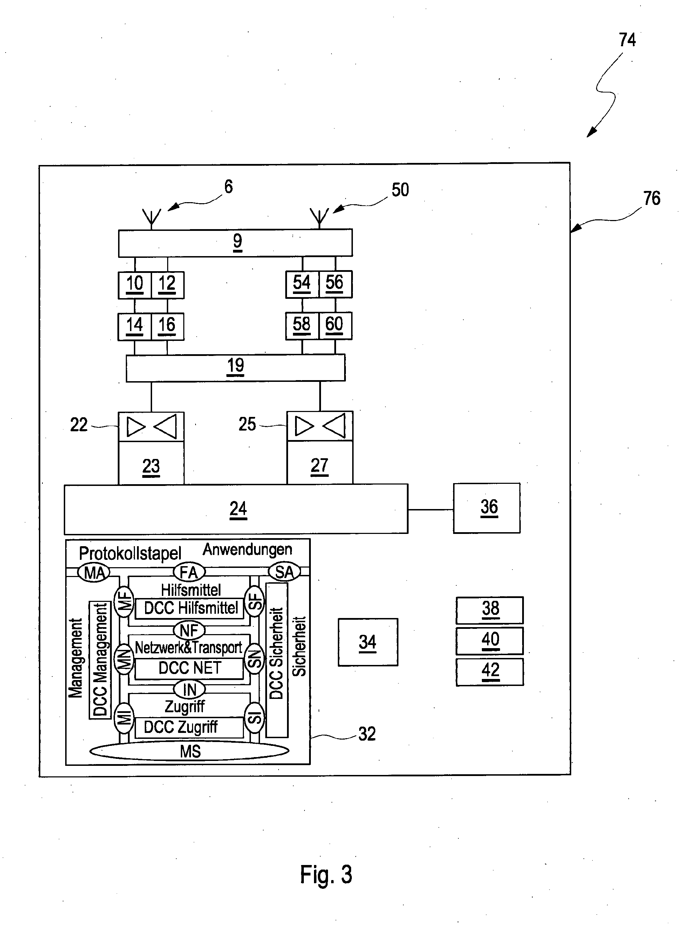

Die in Figur 3 schematisch dargestellte dritte Ausführungsform des Systems 74 für ein Kraftfahrzeug zum Durchführen einer Kommunikation zwischen diesem Kraftfahrzeug und mindestens einem weiteren Kraftfahrzeug umfasst eine zentrale Recheneinheit 76 (802.11p Car2Car Board).

Dabei umfasst die Recheneinheit 76 ein erstes Antennenmodul 6 und ein zweites Antennenmodul 50, die beide zum Senden und Empfangen von Signalen über elektromagnetische Wellen ausgebildet und mit einem ersten gemeinsamen Schalter 9 zum Empfangen und/oder Senden (Rx/Tx-Switch bzw. Receiver/Transceiver-Switch) der Signale verbunden sind. Dem ersten gemeinsamen Schalter 9 sind ein erster SAW-Filter 10 (akustischer Oberflächenfilter), eine Endstufe 12 (PA, power amplifier), ein rauscharmer Verstärker 14 (LNA, low noise amplifier) und ein zweiter SAW-Filter 16 nachgeschaltet, die hier dem ersten Antennenmodul 6 zugeordnet sind. Außerdem sind dem ersten gemeinsamen Schalter 9 ein erster SAW-Filter 54, eine Endstufe 56, ein rauscharmer Verstärker 58 und ein zweiter SAW-Filter 60 nachgeschaltet, die hier dem ersten Antennenmodul 50 zugeordnet sind. Dem ersten SAW-Filter 10, der Endstufe 12, dem rauscharmen Verstärker, dem zweiten SAW-Filter 16 für das erste Antennenmodul 6 sowie dem ersten SAW-Filter 54, der Endstufe 56, dem rauscharmen Verstärker 58 sowie dem zweiten SAW-Filter 60 für das zweite Antennenmodul 50 ist ein zweiter gemeinsamer Schalter 19 nachgeschaltet. Der erste gemeinsame Schalter 9, die ersten SAW-Filter 10, 54, die Endstufen 12, 56, die rauscharmen Verstärker 14, 58, die zweiten SAW-Filter 16, 60 und der zweite gemeinsame Schalter 19 bilden hier ein Signalübermittlungsmodul zum Empfangen und/oder Senden von Signalen, das den beiden Antennenmodulen 6, 50 gemeinsam zugeordnet ist.

Der zweite gemeinsame Schalter 19 ist mit einem ersten Verstärkermodul 22 und einem zweiten Verstärkermodul 25 verbunden. Das erste Verstärkermodul 22 ist dazu ausgebildet, eine Signalverarbeitung 23, u. a. eine Synchronisation von Signalen, durchzuführen. Hierbei werden von dem ersten Verstärkermodul 22 softwaregestützt als Funktionen zur softwaregestützten Signalverarbeitung bspw. eine Analog-Digital-Wandlung (ADC), eine Digital-Analog-Wandlung (DAC), eine Medienzugriffssteuerung (MAC bzw. media acces control) sowie eine erste digitale Basisband- bzw. Baseband-Verarbeitung (BB/DSP) der Signale durchgeführt. Außerdem werden von dem ersten Verstärkermodul 22 eine Bitübertragungsschicht (PHY bzw. physical layer), ein Netzprotokoll (LLC bzw. logical link control) und SDIO IF für eine Signalverarbeitung 23 softwaregestützt bereitgestellt. Das zweite Verstärkermodul 25 ist dazu ausgebildet, eine Signalverarbeitung 27, u. a. eine Synchronisation von Signalen, durchzuführen. Hierbei werden von dem zweiten Verstärkermodul 25 softwaregestützt als Funktionen zur softwaregestützten Signalverarbeitung eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem zweiten Verstärkermodul 25 eine Bitübertragungsschicht (PHY bzw. physical layer), ein Netzprotokoll (LLC bzw. logical link control) und SDIO IF für eine Signalverarbeitung 27 softwaregestützt bereitgestellt.

Beide Verstärkermodule 22, 25 sind mit einem gemeinsamen Rechenkern 24, hier einem Mikrokontroller zum Durchführen einer Anwendung zur Kommunikation zwischen Kraftfahrzeugen (Car2Car App-µC) verbunden.

Die Recheneinheit 72 umfasst auch den Protokollstapel 32, der mit dem Navigationssystem 34 verbunden ist, das Kryptographiemodul 36 und die beiden Speicherbausteine 38, 40. Die Recheneinheit 72 ist über den Anschluss 42 mit dem Netzwerk (CAN) des Kraftfahrzeugs verbunden. Durch die beiden Antennenmodule 6, 50 wird eine Antennendiversität (Rx/Tx diversity) ermöglicht, wobei über den Rechenkern 24 für beide Antennenmodule 6, 50 ein dualer Kanal und/oder Transceiver (CCH+SCH) bereitgestellt wird, wobei zwischen den beiden Kanälen umgeschaltet werden kann.

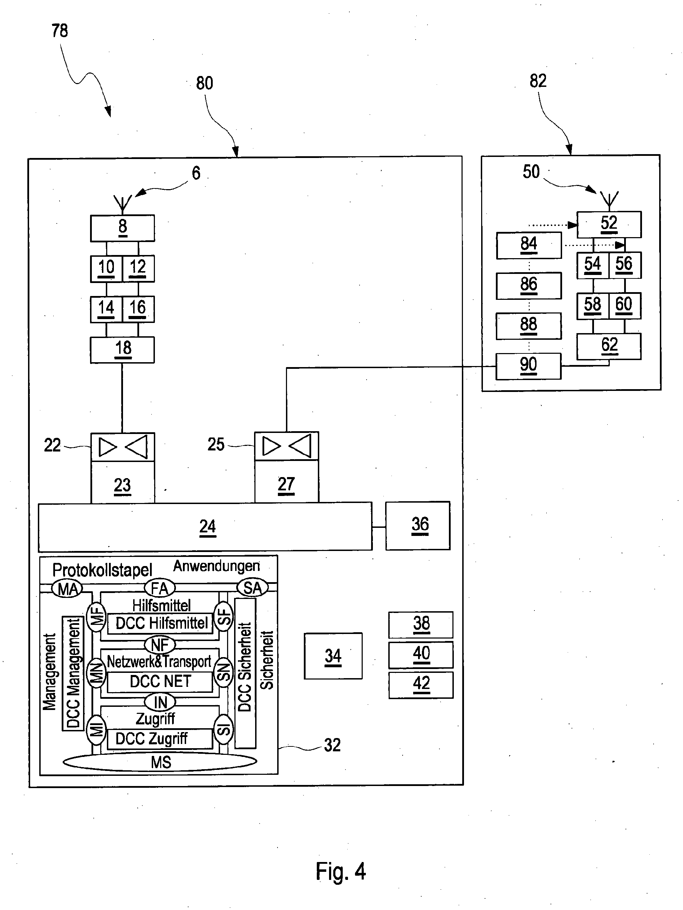

Die in Figur 4 schematisch dargestellte vierte Ausführungsform des Systems 78 für ein Kraftfahrzeug zum Durchführen einer Kommunikation zwischen diesem Kraftfahrzeug und mindestens einem weiteren Kraftfahrzeug umfasst eine zentrale Recheneinheit 80 (COM-Info-Board).

Dabei umfasst die Recheneinheit 80 ein Antennenmodul 6 zum Senden und Empfangen von Signalen über elektromagnetische Wellen, das mit einem ersten Schalter 8 zum Empfangen und/oder Senden (Rx/Tx-Switch bzw. Receiver/Transceiver-Switch) der Signale verbunden ist. Dem ersten Schalter 8 sind ein erster SAW-Filter 10 (akustischer Oberflächenfilter), eine Endstufe 12 (PA, power amplifier), ein rauscharmer Verstärker 14 (LNA, low noise amplifier) und ein zweiter SAW-Filter 16 nachgeschaltet. Außerdem umfasst die Recheneinheit 80 einen zweiten Schalter 18 zum Empfangen und/oder Senden der Signale. Dabei sind der erste SAW-Filter 10, die Endstufe 12, der rauscharme Verstärker 14 und der zweite SAW-Filter 16 zwischen den beiden Schaltern 8, 18 angeordnet. Der erste Schalter 8, der erste SAW-Filter 10, die Endstufe 12, der rauscharme Verstärker 14 und der zweite SAW-Filter 16 bilden hier ein Signalübermittlungsmodul zum Empfangen und/oder Senden von Signalen, das dem Antennenmodul 6 zugeordnet ist.

Der zweite Schalter 18 ist mit einem ersten Verstärkermodul 22 verbunden, das dazu ausgebildet ist, eine Signalverarbeitung 23 durchzuführen. Hierbei werden von dem ersten Verstärkermodul 22 als Funktionen zur softwaregestützten Signalverarbeitung bspw. eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem ersten Verstärkermodul 22 eine Bitübertragungsschicht (PHY bzw. physical layer), ein Netzprotokoll (LLC bzw. logical link control) und SDIO IF für eine Signalverarbeitung 23 softwaregestützt bereitgestellt. Das Verstärkermodul 22 ist mit einem Rechenkern 24, hier einem Mikrocontroller (µC), verbunden. Ein zweites Verstärkermodul 25 der Recheneinheit ist einer Antenneneinheit 82 des Systems 78 zugeordnet und dazu ausgebildet, eine Signalverarbeitung 27, u. a. eine Synchronisation von Signalen, durchzuführen.

Die Recheneinheit 78 umfasst zudem einen Protokollstapel 32 (Stack), der wiederum mit einem Navigationssystem 34 zum Orten des Kraftfahrzeugs mit einem weltweiten Positionierungssystem, bspw. GPS, verbunden ist, ein als ASIC (anwendungsspezifische integrierte Schaltung) ausgebildetes Kryptographiemodul 36, einen als DRAM ausgebildeten dynamischen Speicherbaustein 38 und einen als Flash ausgebildeten Speicherbaustein 40. Die Recheneinheit 78 ist über einen Anschluss 42 mit einem Netzwerk (CAN) des Kraftfahrzeugs verbunden.

Die Antenneneinheit 82 ist mit der Recheneinheit 78 verbunden und umfasst ein Antennenmodul 50 zum Senden und Empfangen von Signalen über elektromagnetische Wellen mit einem ersten Schalter 52 zum Empfangen und/oder Senden (Rx/Tx-Switch bzw. Receiver/Transceiver-Switch) der Signale. Dem ersten Schalter 52 sind ein erster SAW-Filter 54, eine Endstufe 56, ein rauscharmer Verstärker 58 und ein zweiter SAW-Filter 60 nachgeschaltet. Außerdem umfasst die Antenneneinheit 82 einen zweiten Schalter 62 zum Empfangen und/oder Senden der Signale. Der erste Schalter 52, der erste SAW-Filter 54, die Endstufe 56, der rauscharme Verstärker 58, der zweite SAW-Filter 60 und der zweite Schalter 62 bilden hier ein Signalübermittlungsmodul zum Empfangen und/oder Senden von Signalen, das dem Antennenmodul 50 zugeordnet ist. Dabei sind der erste SAW-Filter 54, die Endstufe 56, der rauscharme Verstärker 58 und der zweite SAW-Filter 60 zwischen den beiden Schaltern 52, 62 angeordnet. Die Antenneneinheit 82 umfasst außerdem einen PWR-Detector 84, ein Kontrollmodul 86, eine Gleichstromversorgung 88 und ein Bias-T 90, die in Reihe geschaltet sind. Dabei ist der PWR-Detector 84 mit dem ersten Schalter 52 und der Endstufe 56 verbunden.

Der zweite gemeinsame Schalter 62 ist über das Bias-T 90 mit dem zweiten Verstärkermodul 25 verbunden. Hierbei werden von dem zweiten Verstärkermodul 25 als Funktionen zur softwaregestützten Signalverarbeitung eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem Verstärkermodul 25 eine Bitübertragungsschicht (PHY bzw. physical layer), ein Netzprotokoll (LLC bzw. logical link control) und SDIO IF für eine Signalverarbeitung 27 softwaregestützt bereitgestellt.

Durch die beiden Antennenmodule 6, 50 wird eine Antennendiversität (Rx/Tx diversity) ermöglicht, wobei über den Rechenkern 24 für beide Antennenmodule 6, 50 ein dualer Kanal und/oder Transceiver (CCH+SCH) bereitgestellt wird. Eine Verbindung zwischen der Recheneinheit 80 und der Antenneneinheit 82 wird über einen Kompensator, der auf einem Koaxialkabel basiert, bereitgestellt.

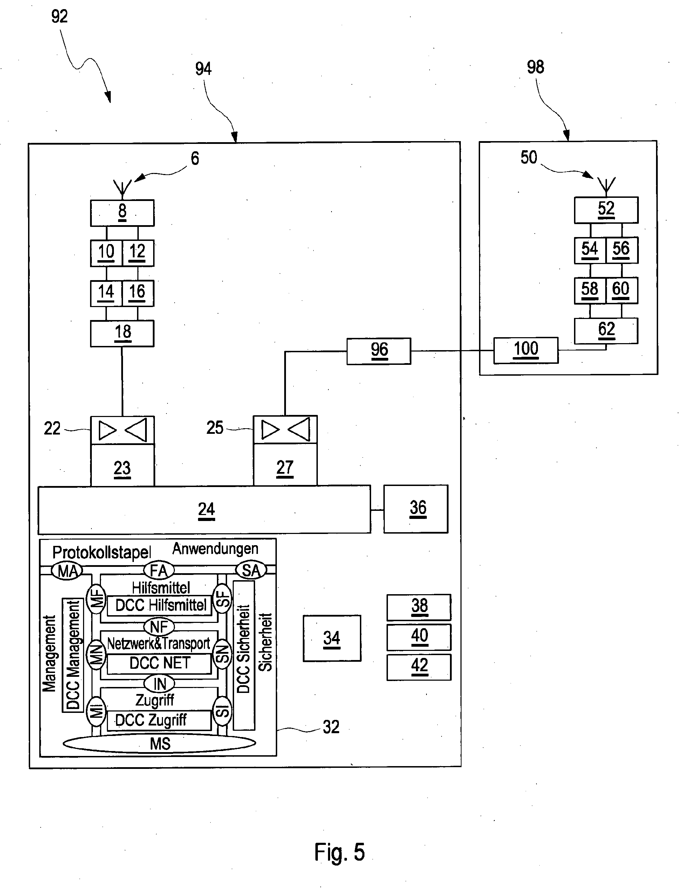

Die in Figur 5 schematisch dargestellte fünfte Ausführungsform des Systems 92 für ein Kraftfahrzeug zum Durchführen einer Kommunikation zwischen diesem Kraftfahrzeug und mindestens einem weiteren Kraftfahrzeug umfasst eine zentrale Recheneinheit 94 (COM-Info-Board).

Dabei umfasst die Recheneinheit 94 ein Antennenmodul 6 zum Senden und Empfangen von Signalen über elektromagnetische Wellen, das mit einem ersten Schalter 8 zum Empfangen und/oder Senden (Rx/Tx-Switch bzw. Receiver/Transceiver-Switch) der Signale verbunden ist. Dem ersten Schalter 8 sind ein erster SAW-Filter 10 (akustischer Oberflächenfilter), eine Endstufe 12 (PA, power amplifier), ein rauscharmer Verstärker 14 (LNA, low noise amplifier) und ein zweiter SAW-Filter 16 nachgeschaltet. Außerdem umfasst die Recheneinheit 94 einen zweiten Schalter 18 zum Empfangen und/oder Senden der Signale. Dabei sind der erste SAW-Filter 10, die Endstufe 12, der rauscharme Verstärker 14 und der zweite SAW-Filter 16 zwischen den beiden Schaltern 8, 18 angeordnet. Der erste Schalter 8, der erste SAW-Filter 10, die Endstufe 12, der rauscharme Verstärker 14 und der zweite SAW-Filter 16 bilden hier ein Signalübermittlungsmodul zum Empfangen und/oder Senden von Signalen, das dem Antennenmodul 6 zugeordnet ist.

Der zweite Schalter 18 ist mit einem ersten Verstärkermodul 22 verbunden, das dazu ausgebildet ist, eine Signalverarbeitung 23, u. a. eine Synchronisation von Signalen, durchzuführen. Hierbei werden von dem Verstärkermodul 22 als Funktionen zur softwaregestützten Signalverarbeitung bspw. eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem Verstärkermodul 22 eine Bitübertragungsschicht (PHY bzw. physical layer), ein Netzprotokoll (LLC bzw. logical link control) und SDIO IF für eine Signalverarbeitung 23 softwaregestützt bereitgestellt. Das Verstärkermodul 22 ist mit einem Rechenkern 24, hier einem Mikrocontroller (µC), verbunden.

Ein zweites Verstärkermodul 25 der Recheneinheit 94 ist über ein Ethernet-Netzwerkprotokoll 96 (ETH/PHY) einer Antenneneinheit 98 des Systems 92 zugeordnet und dazu ausgebildet, eine Signalverarbeitung 27 durchzuführen.

Die Recheneinheit 94 umfasst zudem einen Protokollstapel 32 (pStack), der wiederum mit einem Navigationssystem 34 zum Orten des Kraftfahrzeugs mit einem weltweiten Positionierungssystem, bspw. GPS, verbunden ist, ein als ASIC (anwendungsspezifische integrierte Schaltung) ausgebildetes Kryptographiemodul 36, einen als DRAM ausgebildeten dynamischen Speicherbaustein 38 und einen als Flash ausgebildeten Speicherbaustein 40. Die Recheneinheit 4 ist über einen Anschluss 42 mit einem Netzwerk (CAN) des Kraftfahrzeugs verbunden.

Die Antenneneinheit 98 umfasst ein Antennenmodul 50 zum Senden und Empfangen von Signalen über elektromagnetische Wellen mit einem ersten Schalter 52 zum Empfangen und/oder Senden (Rx/Tx-Switch bzw. Receiver/Transceiver-Switch) der Signale. Dem ersten Schalter 52 sind ein erster SAW-Filter 54, eine Endstufe 56, ein rauscharmer Verstärker 58 und ein zweiter SAW-Filter 60 nachgeschaltet. Außerdem umfasst die Antenneneinheit 98 einen zweiten Schalter 62 zum Empfangen und/oder Senden der Signale. Der erste Schalter 52, der erste SAW-Filter 54, die Endstufe 56, der rauscharme Verstärker 58, der zweite SAW-Filter 60 und der zweite Schalter 62 bilden hier ein Signalübermittlungsmodul zum Empfangen und/oder Senden von Signalen, das dem Antennenmodul 50 zugeordnet ist. Dabei sind der erste SAW-Filter 54, die Endstufe 56, der rauscharme Verstärker 58 und der zweite SAW-Filter 60 zwischen den beiden Schaltern 52, 62 angeordnet. Die Antenneneinheit 98 umfasst außerdem ein Ethernet-Netzwerkprotokoll 100 (ETH/PHY).

Der zweite Schalter 62 ist über das Ethernet-Netzwerkprotokoll 100 der Antenneneinheit 98 und das Ethernet-Netzwerkprotokoll 96 der Recheneinheit 94 mit dem zweiten Verstärkermodul 25 verbunden. Hierbei werden von dem zweiten Verstärkermodul 25 als Funktionen zur softwaregestützten Signalverarbeitung bspw. eine Analog-Digital-Wandlung (ADC), eine Digital-Analog-Wandlung (DAC), eine Medienzugriffssteuerung (MAC bzw. media acces control), sowie eine erste digitale Basisband- bzw. Baseband-Verarbeitung (BB/DSP) der Signale durchgeführt. Außerdem werden von dem Verstärkermodul 25 eine Bitübertragungsschicht (PHY bzw. physical layer), ein Netzprotokoll (LLC bzw. logical link control) und SDIO IF für eine Signalverarbeitung 27 bereitgestellt.

Durch die beiden Antennenmodule 6, 50 wird eine Antennendiversität (Rx/Tx diversity) ermöglicht, wobei über den Rechenkern 24 für beide Antennenmodule 6, 50 ein dualer Kanal und/oder Transceiver (CCH+SCH) bereitgestellt wird. Eine Verbindung zwischen der Recheneinheit 94 und der Antenneneinheit 98 basiert hier auf einem Ethernet unter Berücksichtigung eines I/Q-Basisbands.

Ein erstes Kraftfahrzeug kann zur Kommunikation mit mindestens einem zweiten Kraftfahrzeug eine der vorgestellten Ausführungsformen des Systems 2, 70, 74, 78, 92 aufweisen, wobei das erste Kraftfahrzeug mit dem System 2, 70, 74, 78, 92 über ein öffentliches WLAN (pWLAN) und ggf. über Bluetooth mit dem mindestens einen zweiten Kraftfahrzeug über Signale Informationen und/oder Daten austauscht. Dabei ist es möglich, dass das mindestens eine zweite Kraftfahrzeug ebenfalls eine Ausführungsform des Systems 2, 70, 74, 78, 92 aufweist.

## Patentansprüche

1. System für ein Kraftfahrzeug zum Austausch von Informationen mit mindestens einem weiteren Kraftfahrzeug im Straßenverkehr, wobei das System (2) eine zentrale Recheneinheit (4, 72, 76, 80, 94) mit einem Rechenkern (24) und zwei Antennenmodule (6, 50, 51) aufweist, wobei der Rechenkern (24) mit den zwei Antennenmodulen (6, 50, 51) verbunden ist, wobei jedes Antennenmodul (6, 50, 51) dazu ausgebildet ist, Signale, die Informationen umfassen, mit dem mindestens einen weiteren Kraftfahrzeug auszutauschen, wobei in dem Rechenkern (24) eine Anwendung zum Durchführen einer Kraftfahrzeug-zu-Kraftfahrzeug Kommunikation installiert ist, wobei der Rechenkern (24) dazu ausgebildet ist, jedes Antennenmodul (6, 50) unter Durchführung einer für das jeweilige Antennenmodul (6, 50, 51) durchzuführenden softwaregestützten Signalverarbeitung (23, 27) zu steuern, wobei zwischen dem Rechenkern (24) und einem Protokollstapel (32) der zentralen Recheneinheit (4, 72, 76, 80, 94) Daten für eine Kommunikation mit dem mindestens einen Kraftfahrzeug austauschbar sind.

2. System nach Anspruch 1, bei dem der Rechenkern (24) über jeweils ein Signalübermittlungsmodul zum Empfangen und/oder Senden von Signalen mit jedem Antennenmodul (6, 50, 51) verbunden ist, wobei das jeweilige Signalübermittlungsmodul einen ersten Schalter (8, 52) zum Empfangen und/oder Senden der Signale einen ersten SAW-Filter (10, 54), eine Endstufe (12, 56), einen rauscharmen Verstärker (14, 58), einen zweiten SAW-Filter (16, 60) und einen zweiten Schalter (18, 62) zum Empfangen und/oder Senden der Signale umfasst.

3. System nach Anspruch 1 oder 2, bei dem mindestens ein Antennenmodul (6, 50, 51) in einem Gehäuse der zentralen Recheneinheit (4) und/oder in einer separaten Antenneneinheit (48) angeordnet ist.

4. System nach einem der voranstehenden Ansprüche, bei dem jedes Antennenmodul (6, 50, 51) über ein Verstärkermodul (22, 25) mit dem Rechenkern (24) verbunden ist.

5. Verfahren für ein Kraftfahrzeug zum Austausch von Informationen mit mindestens einem weiteren Kraftfahrzeug im Straßenverkehr, wobei eine zentrale Recheneinheit (4, 72, 76, 80, 94), die einen Rechenkern (24) und zwei Antennenmodule (6, 50, 51) aufweist, wobei der Rechenkern (24) mit den zwei Antennenmodulen (6, 50, 51) verbunden ist, verwendet wird, wobei mit jedem Antennenmodul (6, 50, 51) Signale, die Informationen umfassen, mit dem mindestens einen weiteren Kraftfahrzeug ausgetauscht werden, wobei in dem Rechenkern (24) eine Anwendung zum Durchführen einer Kraftfahrzeug-zu-Kraftfahrzeug Kommunikation installiert ist, wobei jedes Antennenmodul (6, 50, 51) von dem Rechenkern (24) unter Durchführung einer für das jeweilige Antennenmodul (6, 50, 51) durchzuführenden softwaregestützten Signalverarbeitung (23, 27) gesteuert wird, wobei zwischen dem Rechenkern (24) und einem Protokollstapel (32) der zentralen Recheneinheit (4, 72, 76, 80, 94) Daten für eine Kommunikation mit dem mindestens einen Kraftfahrzeug ausgetauscht werden.

6. Verfahren nach Anspruch 5, bei dem durch den Rechenkern (24) zur Durchführung der softwaregestützten Signalverarbeitung (23, 27) eine softwaregestützte Analog-Digital-Wandlung, eine softwaregestützte Digital-Analog-Wandlung, eine softwaregestützte Bitübertragung unter Simulation einer Bitübertragungsschicht, eine softwaregestützte Medienzugriffskontrolle, eine softwaregestützte Medienzugriffssteuerung, eine softwaregestützte logische Verbindungskontrolle und/oder eine softwaregestützte Basisband-Verarbeitung durchgeführt wird.

7. Verfahren nach Anspruch 5 oder 6, bei dem Software, die zur softwaregestützten Signalverarbeitung (23, 27) verwendet wird, aktualisiert wird.

8. Verfahren nach einem der Ansprüche 5 bis 7, bei dem die Signale von dem Rechenkern (24) softwaregestützt aufbereitet, gefiltert, korrigiert, kodiert und/oder dekodiert werden, wobei Daten zum Bereitstellen der Signale von dem Rechenkern (24) softwaregestützt komprimiert werden, und/oder wobei von dem Rechenkern (24) softwaregestützt die Basisband-Verarbeitung und/oder ein Abgleich von Kanälen zum Austausch der Signale mit dem mindestens einen Kraftfahrzeug durchgeführt wird.

9. Verfahren nach einem der Ansprüche 5 bis 8, bei dem zwei Antennenmodule (6, 50, 51) verwendet werden, wobei jedes Antennenmodul (6, 50, 51) von dem Rechenkern (24) unter Durchführung einer jeweiligen Signalverarbeitung (23, 27) gesteuert wird, wobei mit einem ersten Antennenmodul (6) unter Bereitstellung eines öffentlichen WLANs eine Kraftfahrzeug-zu-Kraftfahrzeug-Kommunikation bereitgestellt wird, und wobei mit einem zweiten Antennenmodul (50, 51) über Bluetooth eine Kraftfahrzeug-zu-Kraftfahrzeug-Kommunikation bereitgestellt wird, wobei das erste Antennenmodul (6) mit dem Rechenkern (24) über eine erste Signalverarbeitung (23) gesteuert wird, und wobei das zweite Antennenmodul (50, 51) mit dem Rechenkern (24) über eine zweite Signalverarbeitung (27) gesteuert wird.

## Claims

1. System for a motor vehicle for exchanging information with at least one further motor vehicle on the road, wherein the system (2) has a central computing unit (4, 72, 76, 80, 94) with a computing core (24) and two antenna modules (6, 50, 51), wherein the computing core (24) is connected to the two antenna modules (6, 50, 51), wherein each antenna module (6, 50, 51) is adapted to exchange signals comprising information with the at least one further motor vehicle, wherein an application for performing vehicle-to-vehicle communication is installed in the computing core (24), wherein the computing core (24) is designed to control each antenna module (6, 50) by performing a software-based signal processing (23, 27) to be performed for the respective antenna module (6, 50, 51), wherein data for communication with the at least one motor vehicle are interchangeable between the computing core (24) and a protocol stack (32) of the central computing unit (4, 72, 76, 80, 94).

2. System according to claim 1, in which the computing core (24) is connected to each antenna module (6, 50, 51) via a respective signal transmission module for receiving and/or transmitting signals, wherein the respective signal transmission module comprises a first switch (8, 52) for receiving and/or transmitting the signals, a first SAW filter (10, 54), an output stage (12, 56), a low-noise amplifier (14, 58), a second SAW filter (16, 60) and a second switch (18, 62) for receiving and/or transmitting the signals.

3. System according to claim 1 or 2, in which at least one antenna module (6, 50, 51) is arranged in a housing of the central computing unit (4) and/or in a separate antenna unit (48).

4. System according to any one of the preceding claims, in which each antenna module (6, 50, 51) is connected to the computing core (24) via an amplifier module (22, 25).

5. Method for a motor vehicle for exchanging information with at least one further motor vehicle on the road, wherein a central computing unit (4, 72, 76, 80, 94) is used, having a computing core (24) and two antenna modules (6, 50, 51), wherein the computing core (24) is connected to the two antenna modules (6, 50, 51), wherein signals comprising information are exchanged with the at least one further motor vehicle using each antenna module (6, 50, 51), wherein an application for performing vehicle-to-vehicle communication is installed in the computing core (24), wherein each antenna module (6, 50, 51) is controlled by the computing core (24) by performing a software-based signal processing (23, 27) to be performed for the respective antenna module (6, 50, 51), wherein data for communication with the at least one motor vehicle are exchanged between the computing core (24) and a protocol stack (32) of the central computing unit (4, 72, 76, 80, 94).

6. Method according to claim 5, in which a software-based analogue-to-digital conversion, a software-based digital-to-analogue conversion, a software-based bit transmission under simulation of a physical layer, a software-based media access control, a software-based media access controller, a software-based logical connection control, and/or software-based baseband processing is performed by the computing core (24) for performing the software-based signal processing (23, 27).

7. Method according to claim 5 or 6, in which the software used for software-based signal processing (23, 27) is updated.

8. Method according to any one of claims 5 to 7, in which the signals are processed, filtered, corrected, coded and/or decoded by the computing core (24) using software, wherein data for providing the signals are compressed by the computing core (24) using software, and/or wherein the baseband processing and/or a comparison of channels for exchanging the signals with the at least one motor vehicle is carried out by the computing core (24) using software.

9. Method according to any one of claims 5 to 8, in which two antenna modules (6, 50, 51) are used, wherein each antenna module (6, 50, 51) is controlled by the computing core (24) by performing a respective signal processing (23, 27), wherein a vehicle-to-vehicle communication is provided using a first antenna module (6), providing a public WLAN, and wherein a vehicle-to-vehicle communication is provided via Bluetooth using a second antenna module (50, 51), wherein the first antenna module (6) is controlled by the computing core (24) via a first signal processing (23), and wherein the second antenna module (50, 51) is controlled by the computing core (24) via a second signal processing (27).

## Revendications

1. Système pour un véhicule automobile servant à échanger des informations avec au moins un autre véhicule automobile dans la circulation routière, dans lequel le système (2) présente une unité de calcul (4, 72, 76, 80, 94) centrale avec un cœur de calcul (24) et deux modules d'antenne (6, 50, 51), dans lequel le cœur de calcul (24) est relié aux deux modules d'antenne (6, 50, 51), dans lequel chaque module d'antenne (6, 50, 51) est réalisé pour échanger des signaux, qui comprennent des informations, avec l'au moins un autre véhicule automobile, dans lequel une application servant à mettre en œuvre une communication véhicule automobile à véhicule automobile est installée dans le cœur de calcul (24), dans lequel le cœur de calcul (24) est réalisé pour commander chaque module d'antenne (6, 50) en mettant en œuvre un traitement de signaux (23, 27) assisté par un logiciel à mettre en œuvre pour le module d'antenne (6, 50, 51) respectif, dans lequel des données peuvent être échangées en vue d'une communication avec l'au moins un autre véhicule automobile entre le cœur de calcul (24) et une pile de protocoles (32) de l'unité de calcul (4, 72, 76, 80, 94) centrale.

2. Système selon la revendication 1, où le cœur de calcul (24) est relié à chaque module d'antenne (6, 50, 51) par l'intermédiaire de respectivement un module de transmission de signaux servant à recevoir et/ou à envoyer des signaux, dans lequel le module de transmission de signaux respectif comprend un premier commutateur (8, 52) servant à recevoir et/ou à envoyer les signaux, un premier filtre SAW (10, 54), un étage final (12, 56), un amplificateur (14, 58) à bruit réduit, un deuxième filtre SAW (16, 60) et un deuxième commutateur (18, 62) servant à recevoir et/ou à envoyer les signaux.

3. Système selon la revendication 1 ou 2, où au moins un module d'antenne (6, 50, 51) est disposé dans un boîtier de l'unité de calcul (4) centrale et/ou dans une unité d'antenne (48) séparée.

4. Système selon l'une quelconque des revendications précédentes, où chaque module d'antenne (6, 50, 51) est relié au cœur de calcul (24) par l'intermédiaire d'un module amplificateur (22, 25).

5. Procédé pour un véhicule automobile servant à échanger des informations avec au moins un autre véhicule automobile dans la circulation routière, dans lequel est utilisée une unité de calcul (4, 72, 76, 80, 94) centrale, qui présente un cœur de calcul (24) et deux modules d'antenne (6, 50, 51), dans lequel le cœur de calcul (24) est relié aux deux modules d'antenne (6, 50, 51), dans lequel des signaux, qui comprennent des informations, sont échangés avec l'au moins un autre véhicule automobile avec chaque module d'antenne (6, 50, 51), dans lequel une application servant à mettre en œuvre une communication de véhicule automobile à véhicule automobile est installée dans le cœur de calcul (24), dans lequel chaque module d'antenne (6, 50, 51) est commandé par le cœur de calcul (24) en mettant en œuvre un traitement de signaux (23, 27) assisté par un logiciel à mettre en œuvre pour le module d'antenne (6, 50, 51) respectif, dans lequel des données sont échangées en vue d'une communication avec l'au moins un véhicule automobile entre le cœur de calcul (24) et une pile de protocoles (32) de l'unité de calcul (4, 72, 76, 80, 94) centrale.

6. Procédé selon la revendication 5, où est mis en œuvre par le cœur de calcul (24) aux fins de la mise en œuvre du traitement de signaux (23, 27) assisté par un logiciel une conversion analogique-numérique assistée par un logiciel, une conversion numérique-analogique assistée par un logiciel, une transmission de bits assistée par un logiciel en simulant une couche de transmission de bits, un contrôle d'accès à des supports assisté par un logiciel, une commande d'accès à des supports assistée par un logiciel, un contrôle de connexion logique assisté par un logiciel et/ou un traitement dans la bande de base assisté par un logiciel.

7. Procédé selon la revendication 5 ou 6, où le logiciel, qui est utilisé pour le traitement de signaux (23, 27) assisté par un logiciel, est mis à jour.

8. Procédé selon l'une quelconque des revendications 5 à 7, où les signaux sont préparés, filtrés, corrigés, codés et/ou décodés de manière assistée par un logiciel par le cœur de calcul (24), dans lequel des données servant à fournir les signaux sont compressées de manière assistée par un logiciel par le cœur de calcul (24), et/ou dans lequel le traitement dans la bande de base et/ou une comparaison de canaux pour échanger les signaux avec l'au moins un véhicule automobile sont mis en œuvre de manière assistée par un logiciel par le cœur de calcul (24).

9. Procédé selon l'une quelconque des revendications 5 à 8, où deux modules d'antenne (6, 50, 51) sont utilisés, dans lequel chaque module d'antenne (6, 50, 51) est commandé par le cœur de calcul (24) en mettant en œuvre un traitement de signaux (23, 27) respectif, dans lequel une communication de véhicule automobile à véhicule automobile est fournie avec un premier module d'antenne (6) en fournissant un WLAN public, et dans lequel une communication de véhicule automobile à véhicule automobile est fournie avec un deuxième module d'antenne (50, 51) par Bluetooth, dans lequel le premier module d'antenne (6) est commandé avec le cœur de calcul (24) par l'intermédiaire d'un premier traitement de signaux (23), et dans lequel le deuxième module d'antenne (50, 51) est commandé avec le cœur de calcul (24) par l'intermédiaire d'un deuxième traitement de signaux (27).
